(19) Europäisches Patentamt
European Patent Office
Office européen des brevets

(11) EP 4 299 666 A1

(12) EUROPEAN PATENT APPLICATION
published in accordance with Art. 153(4) EPC

(43) Date of publication:
**03.01.2024 Bulletin 2024/01**

(21) Application number: **21928103.7**

(22) Date of filing: **20.12.2021**

(51) International Patent Classification (IPC):
***C08L 23/12*** *(2006.01)* ***B29C 45/00*** *(2006.01)*
***C08K 3/013*** *(2018.01)* ***C08K 3/04*** *(2006.01)*
***C08K 7/14*** *(2006.01)* ***C08L 23/00*** *(2006.01)*

(52) Cooperative Patent Classification (CPC):
**B29C 45/00; C08K 3/013; C08K 3/04; C08K 7/14; C08L 23/00; C08L 23/12**

(86) International application number:
**PCT/JP2021/047045**

(87) International publication number:
**WO 2022/181010 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2021 JP 2021028601**

(71) Applicant: **Prime Polymer Co., Ltd.**
**Tokyo 105-7122 (JP)**

(72) Inventors:
- **HIROTA, Shigekatsu**
  **Sodegaura-shi, Chiba 299-0265 (JP)**
- **HIRANO, Ichinosuke**
  **Sodegaura-shi, Chiba 299-0265 (JP)**
- **OKAMOTO, Yoshio**
  **Sodegaura-shi, Chiba 299-0265 (JP)**

(74) Representative: **J A Kemp LLP**
**80 Turnmill Street**
**London EC1M 5QU (GB)**

# (54) GLASS FIBER-REINFORCED PROPYLENE-BASED RESIN COMPOSITION

(57) Provided is a material suitable for producing a glass fiber-reinforced molded body with reduced generation of white haze while reducing the amount of a dispersing agent to be used.

A glass fiber-reinforced propylene-based resin composition, including 10 to 50 parts by mass of glass fibers; 50 to 90 parts by mass of a propylene-based resin (provided that the both in total is 100 parts by mass); 0.3 parts by mass or more of carbon black; and a polyolefin wax having an average particle size of 1 to 40 μm in an amount such that a mass ratio of the polyolefin wax to the carbon black is 0.75 to 1.5.

[Fig. 1]

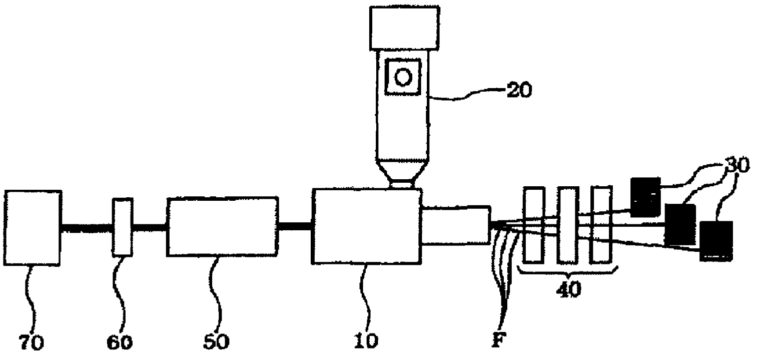

## Description

### Technical Field

The present invention relates to a glass fiber-reinforced propylene-based resin composition.

### Background Art

Fiber-reinforced resin molded bodies are lightweight and excellent in rigidity and heat resistance, and therefore utilized in various fields including electric equipment, automobiles, household furnishings, and medical appliances.

As fiber-reinforced resin molded bodies, for example, molded bodies made of reinforcing fibers such as glass fibers and thermoplastic resins such as polyamide and polypropylene, have been known. Such fiber-reinforced resin molded bodies are used for components that require high rigidity and heat resistance, such as fan shrouds and propeller fans in an engine compartment in the automotive field.

For example, Patent Literature 1 describes a vehicle exterior part formed of a long glass fiber-reinforced polyolefin composition including long glass fiber-reinforced polyolefin resin pellets, a polyolefin resin, an antioxidant, a light stabilizer, and an ultraviolet absorber, and also describes that carbon black or wax, for example, can be further added to this composition. Patent Literature 2 also describes a long glass fiber-reinforced polyolefin composition including long glass fiber-reinforced polyolefin resin pellets, a polyolefin resin, and a pigment with zinc sulfide, and also describes that carbon black or wax, for example, can be further added to this composition.

Patent Literature 3 describes a coloring agent composition including an olefin-based resin, carbon black, and glass fibers, and also describes that a polyethylene wax as a dispersing agent and a lubricant can be further added to this composition.

Patent Literature 4 describes a composite material including a polymer resin and glass fiber strands arranged in the polymer resin, containing glass fibers coated with an aqueous sizing composition, and also describes that the sizing composition may contain, for example, carbon black or a polypropylene wax.

Meanwhile, Patent Literature 5 describes a long-fiber-reinforced propylene-based resin composition including an ethylene-based polymer having a density, a melting point, and heat of fusion within predetermined ranges, and discloses that the composition can form a molded body with reduced generation of white haze-like appearance defects (hereinafter described as "generation of white haze") on a surface of the molded body and having excellent mechanical properties.

### Citation List

### Patent Literature

[Patent Literature 1] JPH9-207233A
[Patent Literature 2] JPH9-183869A
[Patent Literature 3] JP2002-53711A
[Patent Literature 4] JP2014-512323A
[Patent Literature 5] WO2020/091051

### Summary of Invention

### Technical Problem

The molded bodies obtained from conventional glass fiber-reinforced propylene-based resin compositions have room for further improvement from the viewpoint of inhibiting generation of white haze.

The present inventors found that white haze was improved by adding carbon black in a glass fiber-reinforced propylene-based resin composition and also by using metallic soap as a dispersing agent for the carbon black; however, there is room for further improvement in terms of reducing the amount of the dispersing agent used.

Therefore, an object of the present invention is to provide a material suitable for producing a glass fiber-reinforced molded body with reduced generation of white haze while reducing the amount of a dispersing agent to be used.

Solution to Problem

The gist of the present invention is as follows:

[1] A glass fiber-reinforced propylene-based resin composition, comprising

10 to 50 parts by mass of glass fibers;
50 to 90 parts by mass of a propylene-based resin, provided that a total of the glass fibers and the propylene-based resin is 100 parts by mass;
0.3 parts by mass or more of carbon black; and
a polyolefin wax having an average particle size of 1 to 40 μm in an amount such that a mass ratio of the polyolefin wax to the carbon black is 0.75 to 1.5.

[2] The glass fiber-reinforced propylene-based resin composition according to [1], wherein the polyolefin wax is a polypropylene wax.
[3] The glass fiber-reinforced propylene-based resin composition according to [1] or [2], wherein the content of the carbon black is 2 parts by mass or less.
[4] The glass fiber-reinforced propylene-based resin composition according to any of [1] to [3], wherein the propylene-based resin comprises a modified polypropylene.
[5] A method for producing an injection molded body comprising the glass fiber-reinforced propylene-based resin composition according to any of [1] to [4], the method comprising:

a step of producing a pellet from a part or all of the propylene-based resin and the glass fibers;
a step of dryblending the pellet obtained in the above step, the carbon black, the polyolefin wax, and optionally a portion of the propylene-based resin to obtain a composition; and
a step of injection molding the composition.

Advantageous Effect of Invention

According to the glass fiber-reinforced propylene-based resin composition of the present invention, a glass fiber-reinforced molded body with reduced generation of white haze can be produced while reducing the amount of a dispersing agent to be used.

Brief Description of Drawing

[Figure 1] Figure 1 is a schematic view of a pellet production apparatus.

Description of Embodiments

The present invention will be described in more detail.

[Glass fiber-reinforced propylene-based resin composition]

The glass fiber-reinforced propylene-based resin composition according to the present invention is characterized in that it includes glass fibers, a propylene-based resin, carbon black, and a predetermined polyolefin wax.

<<Glass fiber>>

The glass fiber-reinforced propylene-based resin compositions of the present invention contains glass fibers.
The glass fibers include such that they are formed into filamentous fibers by melt spinning glass such as E-glass (Electrical glass), C-glass (Chemical glass), A-glass (Alkali glass), S-glass (High strength glass), and alkali resistant glass.
In the present invention, a long glass fiber is usually used as a glass fiber. A raw material for the long glass fiber is usually a continuous glass fiber bundle, which is commercially available as glass roving. The average fiber diameter is usually 3 to 30 μm, preferably 13 to 20 μm, more preferably 16 to 18 μm, and the number of bundled filaments is usually 400 to 10,000, preferably 1,000 to 6,000, and more preferably 3,000 to 5,000.
Moreover, a plurality of fiber bundles can be bundled and used as described in patent literature, JPH6-114830A.
A functional group may be introduced to a surface of glass fibers by various surface treatment methods, such as electrolytic treatment and sizing agent treatment. A sizing agent is preferably used for surface treatment, and a sizing agent containing a coupling agent is particularly preferably used. Using surface-treated glass fibers improves adhesiveness between the glass fibers and a resin component, thereby obtaining a molded body with a favorable strength and appearance.

Examples of the sizing agent include those containing a coupling agent described in patent literature, JP2003-253563A.

Examples of the coupling agent include a silane-based coupling agents such as amino silane and epoxy silane, and a titanium-based coupling agent.

Other than the coupling agent, a sizing agent containing a resin emulsion for facilitation of handleability is also preferable.

Examples of the resin emulsion contained in the sizing agent include urethane-based, olefin-based, acrylic-based, nylon-based, butadiene-based, or epoxy-based emulsions with the urethane-based or olefin-based emulsion being preferred among them.

<<Propylene-based resin>>

The glass fiber-reinforced propylene-based resin composition of the present invention contains a propylene-based resin.

The propylene-based resin is a polymer containing a structural unit derived from propylene as its main structural unit, and examples thereof include a propylene homopolymer, a propylene·α-olefin random copolymer, and a propylene-based block copolymer (hereinafter collectively referred to as "unmodified propylene-based resin"), as well as a modified polypropylene.

The propylene·α-olefin random copolymers include a random copolymer of propylene and at least one olefin selected from α-olefin having 2 carbon atoms (i.e., ethylene) and α-olefin having 4 to 8 carbon atoms. Examples of the aforementioned α-olefin include ethylene, 1-butene, 1-pentene, 1-hexene, 4-methyl-1-pentene, 3-methyl-1-pentene, 1-heptene and 1-octene, preferably ethylene and 1-butene, and particularly ethylene. The proportion of the structural unit derived from propylene to the total structural unit in the random copolymer is preferably 90 mol% or more and more preferably 95 mol% or more.

The propylene-based block copolymer is preferably configured of a propylene homopolymer portion and a propylene·α-olefin random copolymer portion. The specific aspect of the propylene·α-olefin random copolymer portion is the same as the specific aspect of the propylene·α-olefin random copolymer described above.

When the propylene-based block copolymer is fractionated in a n-decane solvent, it is separated to a component soluble in n-decane at 23°C (hereinafter also referred to as "decane-soluble portion") and a component insoluble in n-decane at 23°C (hereinafter also referred to as "decane-insoluble portion"). The content of the decane-soluble portion is usually 5 to 30% by mass, preferably 5 to 25% by mass, and more preferably 8 to 18% by mass, and the content of the decane-insoluble portion is usually 70 to 95% by mass, preferably 75 to 95% by mass, and more preferably 82 to 92% by mass.

The modified polypropylene is obtained by acid modification of polypropylene. The modification methods include conventionally known methods, such as graft modification and copolymerization. Polypropylenes to be modified include the aforementioned unmodified propylene-based resins.

Examples of modifying agents for modification include an unsaturated carboxylic acid and a derivative thereof. Examples of the unsaturated carboxylic acid include acrylic acid, methacrylic acid, maleic acid, nadic acid, fumaric acid, itaconic acid, crotonic acid, citraconic acid, sorbic acid, mesaconic acid, angelic acid, and phthalic acid. Further, examples of the derivative include acid anhydride, an ester, an amide, an imide, and a metal salt, and specific examples thereof include maleic anhydride, itaconic anhydride, citraconic anhydride, nadic anhydride, phthalic anhydride, methyl acrylate, methyl methacrylate, ethyl acrylate, butyl acrylate, maleic acid monoethyl ester, acrylamide, monoamide maleate, maleimide, N-butyl maleimide, sodium acrylate, and sodium methacrylate. Among them, unsaturated dicarboxylic acid and a derivative thereof are preferred with maleic anhydride and phthalic anhydride being more preferred.

The amount of acid addition to the modified polypropylene, in other words, a proportion of the structure derived from the acid in the modified polypropylene, is preferably 0.1 to 14% by weight and more preferably 0.3 to 8% by weight. The amount of acid addition is determined from the area of a peak at 1,670 $cm^{-1}$ to 1,810 $cm^{-1}$ of an IR spectrum obtained by subjecting a resin to IR measurement.

In a case where the glass fibers and the propylene-based resin form a glass fiber-reinforced resin pellet as described below, polypropylene may undergo modification prior to production of glass fiber-reinforced resin pellets or in a melt kneading process upon the production of glass fiber-reinforced resin pellets.

When a modifying agent or a volatile component derived therefrom (hereinafter also referred to as "volatile component") remains in the modified polypropylene, fogging may result on a surface of a molded body formed of the glass fiber-reinforced propylene-based resin composition. For this reason, the volatile component is preferably as few as possible, and the content of the volatile component in the modified polypropylene, as defined by the formula in [0039] of WO2020/091051, is preferably 9,000 ppm or less and more preferably 7,000 ppm or less. The amount of the volatile component can be reduced by, for example, vacuum drying the modified polypropylene.

From the viewpoint of improving affinity between a glass fiber and the unmodified propylene-based polymer and enhancing a strength or heat resistance of a molded body to be produced, the modified polypropylene is preferably fatty acid anhydride-modified polypropylene and particularly maleic anhydride-modified polypropylene.

The melt flow rate (in accordance with ISO 1133-1, 230°C, load of 2.16 kg) of the modified polypropylene is preferably 50 g/10 minutes or more and more preferably 80 g/10 minutes or more, and the upper limit thereof may be, for example, 1000 g/10 minutes. The melt flow rate of the modified polypropylene in this range allows the glass fiber-reinforced propylene-based resin composition of the present invention to have flowability suitable for injection molding.

Moreover, the melt flow rate (in accordance with ISO 1133-1, 230°C, load of 2.16 kg) of the entire propylene-based resin is preferably 25 to 500 g/10 minutes and more preferably 50 to 400 g/10 minutes, from the viewpoint of injection molding a molded body with excellent mechanical properties and favorable processability.

(Glass fiber-reinforced resin pellet)

In the glass fiber-reinforced propylene-based resin composition of the present invention, a part or all of the propylene-based resin (hereinafter also referred to as "propylene-based resin (P1)") and the glass fibers may form a pellet (hereinafter also referred to as "glass fiber-reinforced resin pellet").

Among the propylene-based resin (P1) contained in the pellet, the melt flow rate (in accordance with ISO 1133-1, 230°C, load of 2.16 kg) of the unmodified propylene-based resin is preferably 20 g/10 minutes or more, more preferably 30 g/10 minutes or more and still more preferably 40 g/10 minutes or more, and the upper limit thereof may be, for example, 300 g/10 minutes. The melt flow rate in this range allows the composition of the present invention to have flowability suitable for injection molding.

The fiber length of the glass fiber in the glass fiber-reinforced resin pellet is usually 4 to 10 mm and preferably 5 to 8 mm, and the fiber diameter is usually 10 to 20 μm and preferably 13 to 18 μm.

In the glass fiber-reinforced resin pellet, glass fibers are aligned substantially parallel to the longitudinal direction of the pellet, and the fiber length of the glass fiber is usually substantially the same as a pellet particle length (i.e., the length of the pellet in the longitudinal direction).

The content of glass fibers in the glass fiber-reinforced resin pellet is preferably 40 to 70% by mass and more preferably 45 to 60% by mass, relative to 100% by mass of the glass fiber-reinforced resin pellets. The content of glass fibers being not less than the lower limit described above enables production of the glass fiber-reinforced resin pellets with favorable productivity. The content of glass fibers being not more than the above upper limit enables a fiber bundle of glass fibers to be sufficiently impregnated with the resin.

The amount of the modified polypropylene in the glass fiber-reinforced resin pellet is preferably 1 to 5% by mass and more preferably 1.5 to 3.5% by mass, relative to 100% by mass of the glass fiber-reinforced resin pellets. The amount of the modified polypropylene being not less than the lower limit described above renders favorable the adhesiveness between a glass fiber and a resin component. The amount of the modified polypropylene being not more than the upper limit described above allows the molecular weight of the modified polypropylene not to be too low, thereby rendering favorable the strength of a molded body produced from the composition of the present invention.

The shape of the glass fiber-reinforced resin pellet is usually columnar.

The particle length (length in the longitudinal direction) of the glass fiber-reinforced resin pellet is usually 4 to 10 mm and preferably 5 to 8 mm. The particle length of the glass fiber-reinforced resin pellet being not less than the lower limit described above results in a molded body produced from the glass fiber-reinforced propylene-based resin composition of the present invention with excellent mechanical properties. The particle length of the glass fiber-reinforced resin pellet being not more than the upper limit described above results in a glass fiber-reinforced propylene-based resin composition of the present invention with excellent moldability.

In the glass fiber-reinforced resin pellet, glass fibers are usually aligned substantially parallel to the longitudinal direction of the pellet.

The large aspect ratio of the glass fiber in the glass fiber-reinforced resin pellet allows a molded body formed of the glass fiber-reinforced propylene-based resin composition of the present invention containing the above glass fiber-reinforced resin pellets to have an excellent mechanical strength.

The glass fiber-reinforced resin pellet can be produced by known molding methods, such as a pullout method, and specifically it can be easily obtained by introducing roving of glass fibers composed of several thousand filaments to an impregnation die and uniformly impregnating between the filaments with a molten propylene-based resin (hereinafter simply referred to as "molten resin") followed by cutting the roving to the required length.

In this method, for example, a method is employed including, while supplying a molten resin from an extruder into an impregnation die arranged at the tip of the extruder, passing a continuous glass fiber bundle into the impregnation die to impregnate the glass fiber bundle with the molten resin, and then pulling it out through a nozzle and pelletizing it to the required length.

In addition, a method can be employed including dryblending an unmodified propylene-based polymer, an unsaturated carboxylic acid or an anhydride thereof, together with an organic peroxide, feeding the mixture into a hopper of an extruder, and supplying it while simultaneously conducting modification.

The method for impregnating glass fiber roving with a molten resin is not particularly limited, and includes, for example, the method described in [0036] of patent literature, WO2010/137305.

In a process of melting a resin, an extruder with two or more feed sections may be used, and the resin and a decomposer may be fed from a top feed and another resin may be fed from a side feed. An organic peroxide is preferred as the decomposer. Two or more extruders (extrusion sections) may also be used, and the decomposer may be fed into at least one of the extruders. Furthermore, a resin, the unsaturated carboxylic acid or a derivative thereof and the decomposer may be fed into at least one of the extruders.

(Propylene-based resin that may be added in addition to glass fiber-reinforced resin pellet)

In a case where the propylene-based resin (P1) contained in the glass fiber-reinforced resin pellet is a portion of the propylene-based resin, the glass fiber-reinforced propylene-based resin composition of the present invention contains the remaining propylene-based resin (hereinafter also referred to as "propylene-based resin (P2)") in addition to the propylene-based resin (P1).

The propylene-based resin (P2) is a polymer containing a structural unit derived from propylene as a major structural unit, examples of which include a propylene homopolymer, a propylene·$\alpha$-olefin random copolymer, and a propylene-based block copolymer.

The details of the propylene·$\alpha$-olefin random copolymer and the propylene-based block copolymer are as described above.

The melt flow rate (in accordance with ISO 1133-1, 230°C, load of 2.16 kg) of the propylene-based resin (P2) is preferably 10 to 300 g/10 minutes, more preferably 20 to 250 g/10 minutes, and still more preferably 20 to 200 g/10 minutes. The melt flow rate of the propylene-based resin (P2) in this range renders a molded body formed of the glass fiber-reinforced propylene-based resin composition of the present invention with excellent mechanical properties.

Examples of forms of the propylene-based resin (P2) include powder and a pellet.

<<Carbon black>>

The glass fiber-reinforced propylene-based resin composition of the present invention contains carbon black.

The content of carbon black in the composition of the present invention is 0.3 parts by mass or more and preferably 0.3 to 2 parts by mass, relative to 100 parts by mass in total of the glass fibers and the propylene-based resin. The content of carbon black within the above range can inhibit generation of white haze in a reinforced fiber molded body produced from the glass fiber-reinforced propylene-based resin composition. In contrast, the content of less than 0.3 parts by mass may not inhibit generation of white haze. In addition, the content being not more than the upper limit described above renders favorable the interfacial adhesion between the glass-reinforced fiber and the propylene-based resin.

Carbon black includes, for example, furnace black, acetylene black, thermal black, and channel black.

<<Polyolefin wax>>

The glass fiber-reinforced propylene-based resin composition of the present invention contains a polyolefin wax with an average particle size of 1 to 40 $\mu$m and preferably 5 to 20 $\mu$m. The average particle size is $D_{50}$ of a volume-based particle size distribution measured by a laser diffraction method.

The average particle size of the polyolefin wax within this range can prevent carbon black particles from being aggregated with each other by effectively arranging the polyolefin wax between carbon black particles and improve dispersibility of the carbon black into the resin component, thereby inhibiting generation of white haze in a molded body. The average particle size being smaller than the lower limit, on the other hand, may make it difficult to produce the polyolefin wax. The average particle size being larger than the upper limit reduces the dispersibility of carbon black may make it unable to inhibit generation of white haze in the molded body.

In the technology for inhibiting generation of white haze of a molded body comprising the glass fiber-reinforced propylene-based resin composition by compounding an ethylene-based polymer, mechanical properties of a molded body may tend to be decreased with increasing the amount of the ethylene-based polymer, however, according to the present invention, there expected to be no concern when compounding the ethylene-based polymer described above, because compounding the carbon black and the polyolefin wax inhibits generation of white haze.

The number-average molecular weight (Mn) of the polyolefin wax in terms of polystyrene, measured by gel permeation chromatography (GPC) under the following or equivalent conditions, is preferably 2,000 to 10,000 and more preferably 3,000 to 4,000.

Apparatus: Gel permeation chromatograph, type: Alliance GPC2000 (manufactured by Waters Corp.)
Solvent: o-Dichlorobenzene
Columns: TSKgel GMH6-HT × 2, TSKgel GMH6-HTL column × 2 (both manufactured by TOSOH CORPORATION)
Flow rate: 1.0 ml/min
Sample: 0.15 mg/mL o-dichlorobenzene solution
Temperature: 140°C

The mass ratio of the polyolefin wax to carbon black (mass of polyolefin wax/ mass of carbon black) is 0.75 to 1.5 and preferably 0.80 to 1.0. The mass ratio within this range can prevent the carbon black particles from being aggregated with each other by effectively arranging the polyolefin wax between carbon black particles and improve dispersibility of carbon black into the resin component, thereby enabling inhibition of generation of white haze in a molded body. The mass ratio being less than the lower limit, on the other hand, reduces the dispersibility of the carbon black, which may be unable to inhibit generation of white haze in a molded body.

The polyolefin wax is preferably a polyethylene wax and a polypropylene wax and more preferably a polypropylene wax.

The polyolefin wax may be used singly or two or more thereof may be combined for use.

<<Other components>>

The glass fiber-reinforced propylene-based resin composition of the present invention may contain a polymer in addition to each of the aforementioned components, if necessary, to the extent that the effects of the present invention are not impaired. Examples of such a polymer include an ethylene-based polymer, and examples of the ethylene-based polymer include the ethylene-based polymer described in paragraphs [0054] to [0060] of patent literature, WO2020/091051.

The glass fiber-reinforced propylene-based resin composition of the present invention may contain, in addition to the above components, additives such as a heat stabilizer, an antistatic agent, a weathering stabilizer, a light stabilizer, an anti-aging agent, an antioxidant, a copper inhibitor, a fatty acid metal salt, a softening agent, a dispersing agent (excluding the polyolefin wax described above), a filler, a coloring agent, a pigment, and a foaming agent, if necessary, to the extent that the effects of the present invention are not impaired (for example, at a proportion of 5% by mass or less relative to 100% by mass of the aforementioned composition). These components may be contained in the form of a master batch.

(Glass fiber-reinforced propylene-based resin composition)

The glass fiber-reinforced propylene-based resin composition of the present invention contains

10 to 50 parts by mass of the glass fibers, preferably 15 to 45 parts by mass thereof, and more preferably 20 to 40 parts by mass thereof;
50 to 90 parts by mass of the propylene-based resin, preferably 55 to 85 parts by mass thereof, and more preferably 60 to 80 parts by mass thereof, provided that the total of glass fibers and the propylene-based resin is 100 parts by mass;
0.3 parts by mass or more of the carbon black and preferably 0.3 to 2 parts by mass thereof; and
the polyolefin wax in an amount such that the mass ratio of the polyolefin wax to the carbon black is 0.75 to 1.5 and preferably 0.80 to 1.0.

The content of each component within the above ranges makes it possible to produce a molded body with reduced generation of white haze.

(Production method of glass fiber-reinforced propylene-based resin composition)

The glass fiber-reinforced propylene-based resin composition of the present invention can be produced by mixing, for example by dry-blending, the glass fibers, the propylene-based resin, the carbon black, the polyolefin wax, and optionally the additive.

A part or all of the propylene-based resin and the glass fibers are preferably mixed in the state of the glass fiber-reinforced resin pellet as described above.

[Glass fiber-reinforced molded body]

The glass fiber-reinforced molded body according to the present invention is composed of a composition including the glass fibers, the propylene-based resin, the carbon black, the polyolefin wax, and optionally the additive.
The details of each component are as described above, unless otherwise specified. The content and technical significance of each component in the aforementioned composition are also the same as the content and technical significance of each component in the glass fiber-reinforced propylene-based resin composition according to the present invention described above, unless otherwise specified.
The length of a glass fiber in the molded body of the present invention is usually different from the length of a glass fiber in the glass fiber-reinforced propylene-based resin composition of the present invention. This is because glass fibers break and shorten upon molding. The length of a glass fiber in the glass fiber-reinforced molded body according to the present invention is usually 0.5 to 5 mm and preferably 0.8 to 3 mm, when denoted as a weight-average fiber length calculated based on the following formula by extracting a predetermined number of glass fibers (1000 fibers) from the molded body and measuring the length of each of those fibers.

$$\text{Weight-average fiber length} = \Sigma(\text{fiber length})^2 / \Sigma(\text{fiber length})$$

The glass fiber-reinforced molded body according to the present invention can be produced by molding a resin composition including the glass fibers, the propylene-based resin, the carbon black, the polyolefin wax, and optionally the additive, for example, the glass fiber-reinforced propylene-based resin composition according to the present invention described above.
A molding method can employ known molding methods such as injection molding, extrusion, blow molding, compression molding, injection-compression molding, gas-assisted injection molding, or foam injection molding, without any particular limitations. Among them, injection molding, compression molding, and injection-compression molding are particularly preferred, and injection molding is preferred from the viewpoint of producing a molded body with excellent appearance (i.e., with reduced generation of white haze).
The molded body of the present invention can be suitably used in various fields, such as automotive interior and exterior parts and electric household appliances. Examples of the automotive interior and exterior parts include inner materials for back doors.

Examples

The present invention will be more specifically described based on Examples below, however, the present invention is not limited to these Examples.

(Measurement methods)

The measurement and evaluation methods for the various properties are as follows.

[Melt flow rate]

The melt flow rate complied with ISO 1133-1 of a raw material resin was measured under the conditions of 230°C and a load of 2.16 kg.

[Average particle size]

The average particle size of a dispersing agent is employed as a $D_{50}$ in a volume-based particle size distribution measured by a laser diffraction method.

[Appearance of molded body]

The appearance of each of the molded bodies produced in Examples, for example, was evaluated according to the following criteria:

AA: Almost no white haze observed.
BB: white haze observed, but less white haze observed than in the case of CC.
CC: white haze clearly observed.

(Raw materials used)

The raw materials used in such as Examples are as follows.

<<Propylene-based resins>>

Commercially available propylene homopolymers with the following properties

(Unmodified propylene-based resins)

- PP1 (propylene homopolymer (MFR (230°C, load of 2.16 kg) = 200 g/10 minutes)
- PP2 (propylene homopolymer (MFR (230°C, load of 2.16 kg) = 30 g/10 minutes))

(Modified polypropylene)

- mPP1 (product name: POLYBOND 3200 (MFR (230°C, load of 2.16 kg) = 200 g/10 minutes, manufactured by ADIVANT USA LLC))

<<Glass fiber>>

- GF (glass roving made of 4,000 glass fibers bundled, having a fiber diameter of 17 µm and surface treated with amino silane (product name: T-431N, manufactured by Nippon Electric Glass Co., Ltd.)

<<Carbon black>>

- Commercial products

<<Dispersing agent>>

- Calcium stearate (commercial product with an average particle size of 11 pm)
- Polypropylene wax (commercial product with an average particle size of 267 pm)
- Micronized polypropylene wax (commercial product with an average particle size of 10 µm)

(Production of glass fiber-reinforced resin composition)

[Production Example 1]

Glass fiber-reinforced resin pellets were produced by using the pellet production apparatus shown in Figure 1.

In Figure 1, reference numeral 10 is a die, reference numeral 20 is an extruder that supplies a molten resin to die 10, reference numeral 30 is rolls of fiber bundles F, reference numeral 40 is a group of tension rolls that apply a constant tension to fiber bundles F pulled into die 10, reference numeral 50 is a cooling means for cooling molten resin-impregnated fiber bundles pulled out of die 10, reference numeral 60 is a pull roll of fiber bundles, and reference numeral 70 is a pelletizer that cuts the molten resin-impregnated fiber bundles pulled out. In this apparatus, three independent fiber bundles F are simultaneously impregnated with a molten resin.

The specific production conditions are as follows:

- Die: Attached to the tip of a 50 mφ extruder, with four rods arranged in a straight line in the impregnation section.
- Fiber bundle: Glass roving made of 4,000 glass fibers bundled, having a fiber diameter of 17 μm and surface treated with amino silane (product name: T-431N, manufactured by Nippon Electric Glass Co., Ltd.)
- Preheating temperature: 200°C
- Resin: A mixture of a propylene-based polymer PP1 and maleic anhydride-modified polypropylene mPP1 in a mass ratio of PP1:mPP1 = 48:2
- Melting temperature: 280°C
- Rods: Four (6mm in diameter × 3 mm in length)

Under the above conditions, fiber bundles were fed into the die for impregnation while adjusting the amount of the fiber bundles with a group of tension rolls, and then pulled out of the die and cooled to fabricate glass fiber-reinforced resin pellets with a particle length of 8 mm, a reinforced fiber length of 8 mm, and the content of the reinforced fiber of 50% by mass by using a pelletizer.

[Comparative Example 1]

60 parts by mass of the glass fiber-reinforced resin pellets, produced in Production Example 1 (hereinafter also referred to as "GFMB"), 40 parts of by mass PP2, 0.2 parts by mass of carbon black, and 0.2 parts by mass of calcium stearate were dryblended to prepare a glass fiber-reinforced resin composition.

Next, a molded body (color plate) was produced from this glass fiber-reinforced resin composition using an injection molding machine under the following conditions, and its appearance was evaluated.

Mold: 90 mm × 50 mm × 2 mm with a crevice having a 15 μm depth
Molding temperature: 240°C
Mold temperature: 45°C

The evaluation results are shown in Table 1.

[Comparative Example 2]

A glass fiber-reinforced resin composition and a molded body thereof were produced in the same manner as in Comparative Example 1, except that 0.2 parts by mass of calcium stearate was changed to 0.2 parts by mass of the polypropylene wax. The evaluation results are shown in Table 1.

[Comparative Example 3]

A glass fiber-reinforced resin composition and a molded body thereof were produced in the same manner as in Comparative Example 1, except that 0.2 parts by mass of calcium stearate was changed to 0.2 parts by mass of the micronized polypropylene wax. The evaluation results are shown in Table 1.

[Comparative Example 4]

A glass fiber-reinforced resin composition and a molded body thereof were produced in the same manner as in Comparative Example 1, except that the amount of carbon black was changed to 0.4 parts by mass and the amount of calcium stearate was changed to 0.4 parts by mass. The evaluation results are shown in Table 1.

[Comparative Example 5]

A glass fiber-reinforced resin composition and a molded body thereof were produced in the same manner as in Comparative Example 2, except that the amount of carbon black was changed to 0.4 parts by mass and the amount of the polypropylene wax was changed to 0.4 parts by mass. The evaluation results are shown in Table 1.

[Example 1]

A glass fiber-reinforced resin composition and a molded body thereof were produced in the same manner as in Comparative Example 1, except that the amount of carbon black was changed to 0.4 parts by mass and 0.2 parts by mass of calcium stearate was changed to 0.4 parts by mass of the micronized polypropylene wax. The evaluation results are shown in Table 1.

[Comparative Example 6]

A glass fiber-reinforced resin composition and a molded body thereof were produced in the same manner as in Comparative Example 1, except that the amount of carbon black was changed to 0.8 parts by mass and the amount of calcium stearate was changed to 0.8 parts by mass. The evaluation results are shown in Table 1.

[Comparative Example 7]

A glass fiber-reinforced resin composition and a molded body thereof were produced in the same manner as in Comparative Example 2, except that the amount of carbon black was changed to 0.8 parts by mass and the amount of the polypropylene wax was changed to 0.8 parts by mass. The evaluation results are shown in Table 1.

[Example 2]

A glass fiber-reinforced resin composition and a molded body thereof were produced in the same manner as in Example 1, except that the amount of carbon black was changed to 0.8 parts by mass and the amount of the micronized polypropylene wax was changed to 0.8 parts by mass. The evaluation results are shown in Table 1.

[Comparative Example 8]

A glass fiber-reinforced resin composition and a molded body thereof were produced in the same manner as in Comparative Example 1, except that the amount of carbon black was changed to 1.2 parts by mass and the amount of calcium stearate was changed to 1.2 parts by mass. The evaluation results are shown in Table 1.

[Comparative Example 9]

A glass fiber-reinforced resin composition and a molded body thereof were produced in the same manner as in Comparative Example 2, except that the amount of carbon black was changed to 1.2 parts by mass and the amount of the polypropylene wax was changed to 1.2 parts by mass. The evaluation results are shown in Table 1.

[Example 3]

A glass fiber-reinforced resin composition and a molded body thereof were produced in the same manner as in Example 1, except that the amount of carbon black was changed to 1.2 parts by mass and the amount of the micronized polypropylene wax was changed to 1.2 parts by mass. The evaluation results are shown in Table 1.

[Comparative Example 10]

A glass fiber-reinforced resin composition and a molded body thereof were produced in the same manner as in Comparative Example 1, except that the amount of carbon black was changed to 1.6 parts by mass and the amount of calcium stearate was changed to 1.6 parts by parts. The evaluation results are shown in Table 1.

[Comparative Example 11]

A glass fiber-reinforced resin composition and a molded body thereof were produced in the same manner as in Comparative Example 2, except that the amount of carbon black was changed to 1.6 parts by mass and the amount of the polypropylene wax was changed to 1.6 parts by mass. The evaluation results are shown in Table 1.

[Example 4]

A glass fiber-reinforced resin composition and a molded body thereof were produced in the same manner as in Example 1, except that the amount of carbon black was changed to 1.6 parts by mass and the amount of the micronized polypropylene wax was changed to 1.6 parts by mass. The evaluation results are shown in Table 1.

Table 1

| | | | Comp. Ex. 1 | Comp. Ex. 2 | Comp. Ex. 3 | Comp. Ex. 4 | Comp. Ex. 5 | Ex. 1 |
|---|---|---|---|---|---|---|---|---|
| Amount (parts by mass) | | | | | | | | |
| GFMB | GF | | 30 | 30 | 30 | 30 | 30 | 30 |
| | PP1 | (MFR:200 g/10 min) | 28.8 | 28.8 | 28.8 | 28.8 | 28.8 | 28.8 |
| | mPP1 | (MFR:200 g/10 min) | 1.2 | 1.2 | 1.2 | 1.2 | 1.2 | 1.2 |
| PP | PP2 | (MFR: 30 g/10 min) | 40 | 40 | 40 | 40 | 40 | 40 |
| Pigment | Carbon black | | 0.2 | 0.2 | 0.2 | 0.4 | 0.4 | 0.4 |
| Dispersing agent | Calcium stearate | | 0.2 | | | 0.4 | | |
| | Polypropylene wax | | | 0.2 | | | 0.4 | |
| | Micronized polypropylene wax | | | | 0.2 | | | 0.4 |
| Evaluation results | | | | | | | | |
| Appearance | | | CC | CC | CC | CC | CC | AA |
| | | | Comp. Ex. 6 | Comp. Ex. 7 | Ex. 2 | Comp. Ex. 8 | Comp. Ex. 9 | Ex. 3 |
| Amount (parts by mass) | | | | | | | | |
| GFMB | GF | | 30 | 30 | 30 | 30 | 30 | 30 |
| | PP1 | (MFR:200 g/10 min) | 28.8 | 28.8 | 28.8 | 28.8 | 28.8 | 28.8 |
| | mPP1 | (MFR:200 g/10 min) | 1.2 | 1.2 | 1.2 | 1.2 | 1.2 | 1.2 |
| PP | PP2 | (MFR: 30 g/10 min) | 40 | 40 | 40 | 40 | 40 | 40 |
| Pigment | Carbon black | | 0.8 | 0.8 | 0.8 | 1.2 | 1.2 | 1.2 |
| Dispersing agent | Calcium stearate | | 0.8 | | | 1.2 | | |
| | Polypropylene wax | | | 0.8 | | | 1.2 | |
| | Micronized polypropylene wax | | | | 0.8 | | | 1.2 |
| Evaluation results | | | | | | | | |
| Appearance | | | CC | CC | AA | BB | BB | AA |

(continued)

| | | | Comp. Ex. 10 | Comp. Ex. 11 | Ex. 4 |
|---|---|---|---|---|---|
| Amount (parts by mass) | | | | | |
| GFMB | GF | | 30 | 30 | 30 |
| | PP1 | (MFR:200 g/10 min) | 28.8 | 28.8 | 28.8 |
| | mPP1 | (MFR:200 g/10 min) | 1.2 | 1.2 | 1.2 |
| PP | PP2 | (MFR:30 g/10 min) | 40 | 40 | 40 |
| Pigment | Carbon black | | 1.6 | 1.6 | 1.6 |
| Dispersing agent | Calcium stearate | | 1.6 | | |
| | Polypropylene wax | | | 1.6 | |
| | Micronized polypropylene wax | | | | 1.6 |
| Evaluation results | | | | | |
| Appearance | | | BB | BB | AA |

Reference Signs List

10 die
20 extruder
30 roll of fiber bundle F
40 group of tension rolls
50 cooling means
60 pull roll
70 pelletizer

## Claims

**1.** A glass fiber-reinforced propylene-based resin composition, comprising

10 to 50 parts by mass of glass fibers;
50 to 90 parts by mass of a propylene-based resin, provided that a total of the glass fibers and the propylene-based resin is 100 parts by mass;
0.3 parts by mass or more of carbon black; and
a polyolefin wax having an average particle size of 1 to 40 μm in an amount such that a mass ratio of the polyolefin wax to the carbon black is 0.75 to 1.5.

**2.** The glass fiber-reinforced propylene-based resin composition according to claim 1, wherein the polyolefin wax is a polypropylene wax.

**3.** The glass fiber-reinforced propylene-based resin composition according to claim 1 or 2, wherein a content of the carbon black is 2 parts by mass or less.

**4.** The glass fiber-reinforced propylene-based resin composition according to any one of claims 1 to 3, wherein the propylene-based resin comprises a modified polypropylene.

**5.** A method for producing an injection molded body comprising the glass fiber-reinforced propylene-based resin composition according to any one of claims 1 to 4, the method comprising:

a step of producing a pellet from a part or all of the propylene-based resin and the glass fibers;
a step of dryblending the pellet obtained in the above step, the carbon black, the polyolefin wax, and optionally a portion of the propylene-based resin to obtain a composition; and
a step of injection molding the composition.

[Fig. 1]

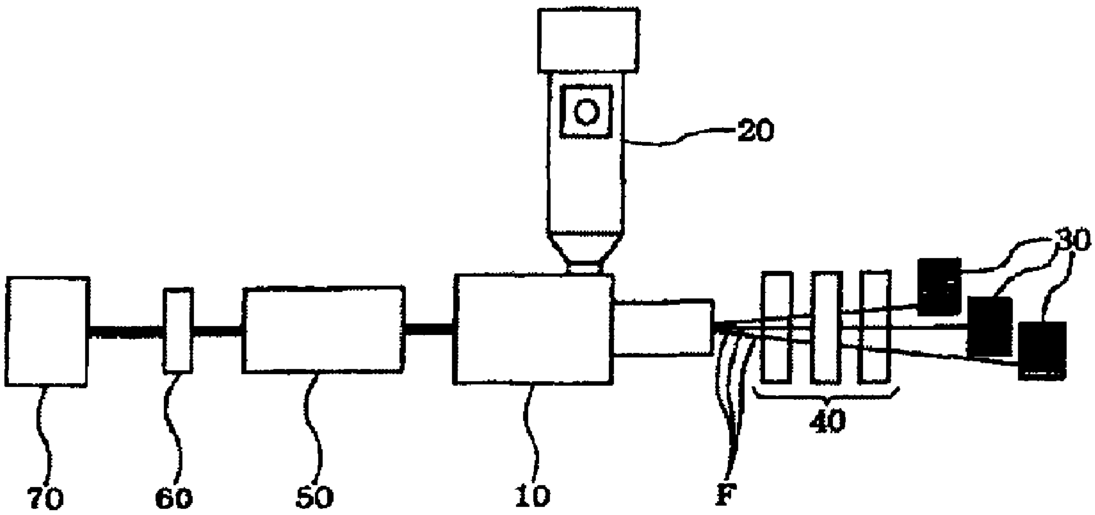

**INTERNATIONAL SEARCH REPORT**

International application No. **PCT/JP2021/047045**

**A. CLASSIFICATION OF SUBJECT MATTER**

***C08L 23/12***(2006.01)i; ***B29C 45/00***(2006.01)i; ***C08K 3/013***(2018.01)i; ***C08K 3/04***(2006.01)i; ***C08K 7/14***(2006.01)i; ***C08L 23/00***(2006.01)i
FI: C08L23/12; B29C45/00; C08K3/013; C08K3/04; C08K7/14; C08L23/00

According to International Patent Classification (IPC) or to both national classification and IPC

**B. FIELDS SEARCHED**

Minimum documentation searched (classification system followed by classification symbols)

C08L23/12; B29C45/00; C08K3/013; C08K3/04; C08K7/14; C08L23/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-89706 A (IDEMITSU KOSAN CO LTD) 07 April 2005 (2005-04-07) claims, paragraphs [0023], [0025], [0032], [0050]-[0051], examples | 1-5 |
| A | JP 2002-371136 A (KURARAY CO LTD) 26 December 2002 (2002-12-26) paragraph [0033] | 1-5 |
| A | JP 2-150444 A (TOYODA GOSEI CO LTD) 08 June 1990 (1990-06-08) entire text | 1-5 |
| A | JP 2-138349 A (TOYODA GOSEI CO LTD) 28 May 1990 (1990-05-28) entire text | 1-5 |

☐ Further documents are listed in the continuation of Box C.

☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 January 2022** | **25 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/047045**

| Patent document cited in search report | Publication date (day/month/year) | Patent family member(s) | Publication date (day/month/year) |
|---|---|---|---|
| JP 2005-89706 A | 07 April 2005 | (Family: none) | |
| JP 2002-371136 A | 26 December 2002 | (Family: none) | |
| JP 2-150444 A | 08 June 1990 | US 5079281 A<br>entire text | |
| JP 2-138349 A | 28 May 1990 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H9207233 A
- JP H9183869 A
- JP 2002053711 A
- JP 2014512323 A
- WO 2020091051 A
- JP H6114830 A
- JP 2003253563 A
- WO 2010137305 A